# EUROPÄISCHE PATENTSCHRIFT

(11) **EP 3 702 042 B1**
(45) Veröffentlichungstag und Bekanntmachung des Hinweises auf die Patenterteilung: **07.06.2023**
(21) Anmeldenummer: 20159587.3
(22) Anmeldetag: 26.02.2020
(51) Int. Cl.: B03C 3/014, B03C 3/017, B03C 3/34, F23J 15/02, F23J 15/06, F24H 9/00, B03C 3/36, B03C 3/41, B03C 3/47, B03C 3/76, B03C 3/88

(54) **HEIZKESSEL**
BOILER
CHAUDIÈRE

(30) Priorität: 26.02.2019 AT 501562019
(43) Veröffentlichungstag der Anmeldung: 02.09.2020
(73) Patentinhaber: Hargassner Ges mbH, 4952 Weng/Innkreis (AT)
(72) Erfinder: Hargassner, Markus, 4952 Weng im Innkreis (AT); Gruber, Johann, 4911 Tumeltsham (AT)
(74) Vertreter: Hübscher & Partner Patentanwälte GmbH

(56) Entgegenhaltungen:
- EP-A2- 1 958 696
- EP-A2- 2 098 783
- AT-B1- 516 061
- DE-A1-102008 049 211
- DE-C- 380 023
- DE-C- 447 137
- DE-C- 448 505
- DE-C- 521 617
- DE-U1-202010 016 404

## Beschreibung

Die Erfindung bezieht sich auf einen Heizkessel mit einem einer Brennkammer nachgeordneten, einen Sturz- und einen Steigzug für die Verbrennungsgase umfassenden Wärmetauscher, mit einer den Sturz- und den Steigzug verbindenden, einen Abscheider für Flugasche bildenden Umlenkkammer, mit einem den Wärmetauscher aufnehmenden Kesselmantel, der einen am Abgasauslass des Wärmetauschers vorgesehenen Anschlussflansch für ein Saugzuggebläse aufweist, und mit einem elektrostatischen Abscheider, dessen außerhalb des Kesselmantels angeordnetes Gehäuse zwischen einem Einlass und einem Auslass einen abwärts und einen aufwärts verlaufenden Strömungskanalabschnitt mit eine Sprühelektrode umgebenden Abscheideelektroden sowie eine die beiden Strömungskanalabschnitte verbindende Abscheidekammer umfasst.

Heizkessel für Festbrennstoffe sind aus dem Stand der Technik, beispielsweise aus dem Dokument DE 20 2010 016 404 U1, bekannt.

Um die Abgase von Heizkesseln von restlichen Feststoffanteilen zu reinigen, bevor sie durch einen Abgaskamin ins Freie ausgeblasen werden, ist es bekannt, zwischen dem Heizkessel und dem Abgaskamin einen elektrostatischen Abscheider vorzusehen, der ein Gehäuse mit Strömungskanalabschnitten zwischen einem Einlass und einem Auslass für die mittels eines Saugzuggebläses aus dem Heizkessel abgezogenen Abgase aufweist. In zumindest einem der beiden Strömungskanalabschnitte ist eine an eine Hochspannungsquelle angeschlossene Sprühelektrode vorgesehen, die von Abscheideelektroden umgeben ist, sodass die über die Sprühelektrode ionisierten Feststoffteilchen im Abgas aufgrund des wirksamen elektrischen Feldes an die Abscheideelektroden angelagert werden. Die auf diese Art abgeschiedenen Feststoffteilchen können dann aus dem Gehäuse ausgetragen werden, wobei das Reinigen der Abscheideelektroden und der Sprühelektrode mit Hilfe eines Rüttelantriebs vorgenommen werden kann. Ein elektrostatischer Abscheider für die Reinigung von Rauchgasen ist beispielsweise aus dem Dokument DE 10 2008 049 211 A1 bekannt. Des Weiteren sind Heizkessel mit darin integriertem elektrostatischem Abscheider bekannt, beispielsweise aus dem Dokument AT 516061 B1.

Nachteilig bei diesen bekannten elektrostatischen Abscheidern ist der mit ihrer Installation verbundene Aufwand, weil entsprechend Platz für die Aufstellung des elektrostatischen Abscheiders geschaffen werden muss.

Der Erfindung liegt somit die Aufgabe zugrunde, einen nachträglich mit dem Heizkessel verbindbaren elektrostatischen Abscheider zu schaffen, der Platz sparend angeordnet werden kann und für einfache Konstruktionsverhältnisse sorgt. Ausgehend von einem Heizkessel der eingangs geschilderten Art löst die Erfindung die gestellte Aufgabe gemäß Anspruch 1 dadurch, dass das Gehäuse des elektrostatischen Abscheiders mit seinem Einlass am Anschlussflansch des Kesselmantels für das Saugzuggebläse angeflanscht ist und das Saugzuggebläse aufnimmt. Die Abscheidekammer des elektrostatischen Abscheiders kann eine in der Umlenkkammer des Wärmetauschers mündende Förderschnecke aufweisen.

Da das Gehäuse des elektrostatischen Abscheiders unmittelbar an den für das Saugzuggebläse vorgesehenen Anschlussflansch des Kesselmantels angeflanscht werden kann, ergeben sich platzsparende Anbaubedingungen mit dem Vorteil eines vergleichsweise geringen konstruktiven Aufwands, weil das für den Heizkessel erforderliche Saugzuggebläse vom Gehäuse des elektrostatischen Abscheiders aufgenommen wird. Mit dieser Anordnung bedarf es im Allgemeinen keiner Änderung des Abgasanschlusses an den Abgaskamin, und zwar insbesondere dann nicht, wenn der aufwärts gerichtete Strömungskanalabschnitt auf der dem Kesselmantel zugekehrten Gehäuseseite verläuft und einen Auslass aufweist, der dem Auslass eines unmittelbar an den Kesselmantel angeflanschten Saugzuggebläses entspricht.

Mit dem unmittelbaren Anschluss des Gehäuses des elektrostatischen Abscheiders an den Kesselmantel werden außerdem konstruktive Voraussetzungen geschaffen, die abgeschiedenen Feststoffteilchen aus dem Gehäuse des elektrostatischen Abscheiders in den Heizkessel abzuführen und mit der im Heizkessel anfallenden Asche zu entsorgen. Zu diesem Zweck braucht die im Übergangsbereich zwischen den abwärts und aufwärts führenden Strömungskanalabschnitten des elektrostatischen Abscheiders vorgesehene Abscheidekammer lediglich mit einer in der Umlenkkammer des Wärmetauschers des Heizkessels mündenden Förderschnecke versehen zu werden, sodass die sich in der Abscheidekammer sammelnden, abgeschiedenen Feststoffteilchen mittels der Förderschnecke in die Umlenkkammer des Wärmetauschers im Heizkessel gefördert werden, um dann zusammen mit der im Bereich der Umlenkkammer des Wärmetauschers aus den Abgasen abgeschiedenen Feststofffracht ausgefördert zu werden, beispielsweise in den Ascheraum der Brennkammer. Bei bestehenden Heizkesseln muss hierfür der Kesselmantel mit einer Durchführung für die Förderschnecke der Abscheidekammer des elektrostatischen Abscheiders versehen werden. Besonders einfache Anschlussbedingungen ergeben sich jedoch, wenn in den Heizkesseln bereits entsprechende Durchführungen für einen allfälligen Anschluss eines elektrostatischen Abscheiders vorbereitet sind.

Um für die Förderschnecke in der Abscheidekammer des elektrostatischen Abscheiders keinen gesonderten Antrieb vorsehen zu müssen, kann die Förderschnecke der Abscheidekammer mit der in der Umlenkkammer des Wärmetauschers vorgesehenen Förderschnecke in Antriebsverbindung stehen, beispielsweise über ein Zahnradgetriebe.

Die Reinigung der Abscheideelektroden und der Sprühelektrode kann konstruktiv in einfacher Weise dadurch sichergestellt werden, dass die Abscheideelektroden und die Sprühelektrode in einem der Höhe nach verschiebbar im Gehäuse gelagerten Gestell angeordnet sind, an dem ein Stellantrieb angreift.

Obwohl der Stellantrieb unterschiedlich aufgebaut sein kann, ergeben sich besonders vorteilhafte Konstruktionsbedingungen, wenn der Stelltrieb als Nockenantrieb ausgebildet wird. Weist dieser Nockenantrieb einen drehbar gelagerten, mit einem am Gestell vorgesehenen Nockenfolger zusammenwirkenden Nocken mit einer Steilflanke auf, so wird das Gestell über die ansteigende Nockenbahn durch den entlang der Nockenbahn gleitenden Nockenfolger im Gehäuse angehoben, bis es beim Erreichen der Steilflanke im freien Fall die Ausgangsposition einnimmt. Durch die dabei auf die Feststoffteilchen einwirkenden Kräfte werden die Feststoffteilchen von den Abscheideelektroden und der Sprühelektrode gelöst und sammeln sich in der Abscheidekammer. Ist der Nockenantrieb mit der Förderschnecke der Abscheidekammer verbunden, so erfolgt die Reinigung der Abscheideelektroden und der Sprühelektroden mit der Betätigung der Förderschnecke.

In der Zeichnung ist der Erfindungsgegenstand beispielsweise dargestellt. Es zeigen
- Fig. 1: einen erfindungsgemäß an einen Heizkessel angeschlossenen elektrostatischen Abscheider in einem Vertikalschnitt und

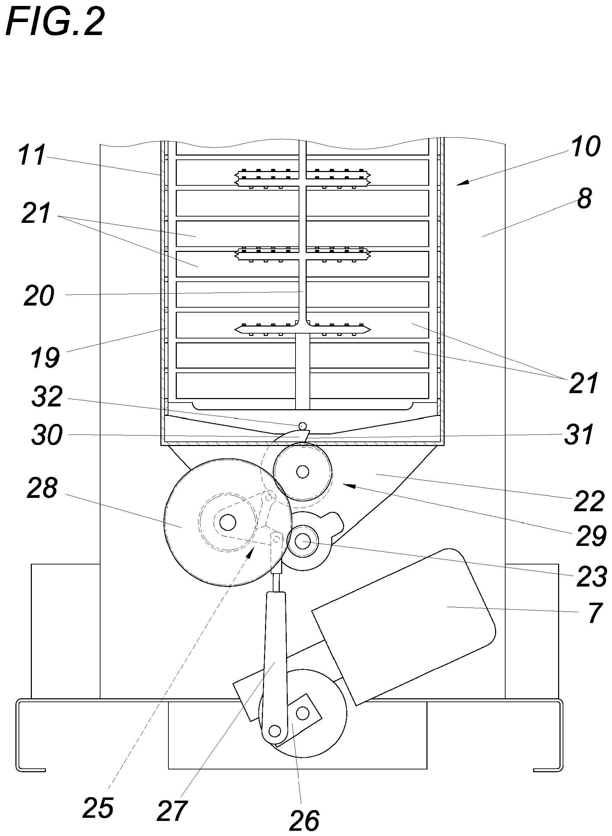

- Fig. 2: einen Schnitt nach der Linie II-II der Fig. 1 in einem größeren Maßstab.

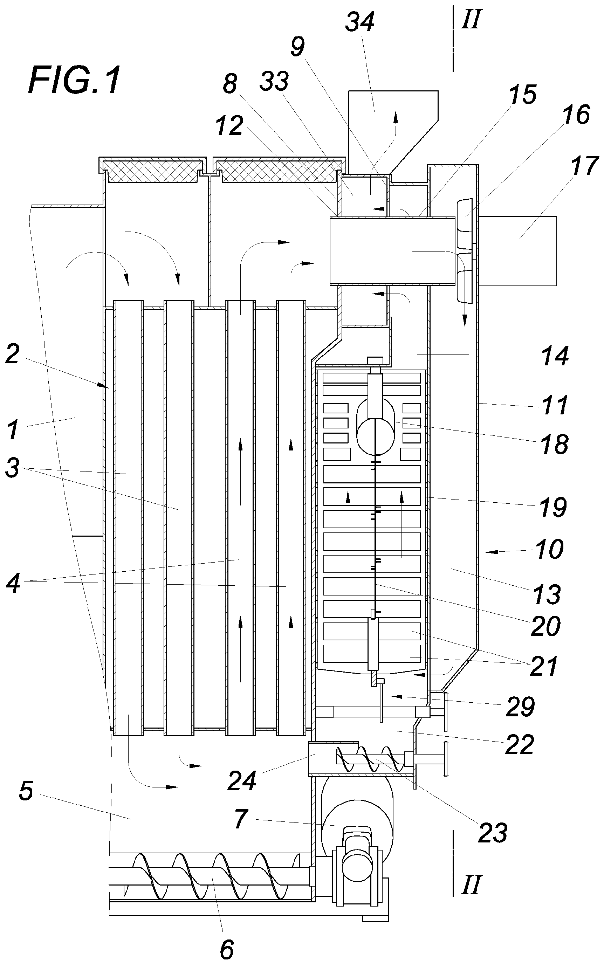

Wie der Fig. 1 entnommen werden kann, ist an die Brennkammer 1 des nicht näher dargestellten Heizkessels ein Wärmetauscher 2 angeschlossen, der einen Sturzzug 3 und einen Steigzug 4 für die Verbrennungsgase aus der Brennkammer 1 aufweist. Die den Sturzzug 3 und den Steigzug 4 verbindende Umlenkkammer 5 ist mit einer Förderschnecke 6 versehen, die von einem Antriebsmotor 7 angetrieben wird und die sich in der Umlenkkammer 5 abscheidende Flugasche in den Ascheraum unterhalb der Brennkammer 1 ausfördert. Der Kesselmantel 8 bildet einen Anschlussflansch 9 für ein Saugzuggebläse. An diesem Anschlussflansch 9 ist jedoch kein Saugzuggebläse, sondern ein elektrostatischer Abscheider 10 angeflanscht. Dieser elektrostatische Abscheider 10 weist ein Gehäuse 11 auf, das einen an den Abgasauslass 12 des Wärmetauschers 2 angeschlossenen abwärts führenden Strömungskanalabschnitt 13 und einen aufwärts gerichteten Strömungskanalabschnitt 14 umfasst. Der abwärts gerichtete Strömungskanalabschnitt 13 wird mittels eines Anschlussrohres 15 mit dem Abgasauslass 12 des Wärmetauschers 2 verbunden, wobei das Gehäuse 11 im Bereich des Austrittsendes des Anschlussrohres 15 ein Saugzuggebläse 16 aufnimmt, dessen Antriebsmotor mit 17 bezeichnet ist.

Der aufwärts gerichtete Strömungskanalabschnitt 14 weist eine langlochartige Verschiebeführung 18 für ein kastenförmiges Gestell 19 auf, das mit einer Sprühelektrode 20 und diese Sprühelektrode 20 umgebenden Abscheideelektroden 21 versehen ist. Unterhalb des Gestells 19 bildet das Gehäuse 11 eine Abscheidekammer 22 mit einer Förderschnecke 23, die über einen Durchtritt 24 in die Umlenkkammer 5 des Wärmetauschers 2 mündet. Der Antrieb der Förderschnecke 23 wird vom Antriebsmotor 7 für die Förderschnecke 6 der Umlenkkammer 5 abgeleitet, und zwar über einen Klinkenantrieb 25, der über eine auf der Welle des Antriebsmotors 7 sitzende Kurbel 26 und eine am Kurbelarm 26 angreifende Koppel 27 beaufschlagt wird und die Förderschnecke 23 über ein Zahnrad 28 schrittweise antreibt.

Zur Reinigung der Sprühelektrode 20 und der Abscheideelektroden 21 ist das Gestell 19 mit einem Nockenantrieb 29 versehen. Dieser Nockenantrieb 29 umfasst eine vom Zahnrad 28 angetriebene Nockenwelle mit einem Nocken 30, der eine ansteigende Nockenbahn mit einer radialen Steilflanke 31 aufweist. Der Nocken 30 wirkt mit einem am Gestell 19 vorgesehenen Nockenfolger 32 zusammen, der entlang der ansteigenden Nockenbahn des Nockens 30 gleitet und dabei das Gestell 19 im Gehäuse 11 anhebt, bis der Nockenfolger 32 die Steilflanke 31 erreicht und dadurch das Gestell 19 freigibt, das gewichtsbedingt in seine Ausgangsstellung zurückfällt und dabei zufolge der stoßartigen Belastung für ein Loslösen der an den Elektroden 20, 21 anhaftenden Feststoffteilchen sorgt, die in die Abscheidekammer 22 abfallen und durch die Förderschnecke 23 aus der Abscheidekammer 22 in die Umlenkkammer 5 des Wärmetauschers 2 ausgetragen werden.

Wie sich aus den in der Fig. 1 eingezeichneten Strömungspfeilen ergibt, werden die Verbrennungsgase aus der Brennkammer 1 zunächst durch den Wärmetauscher 2 geführt, bevor sie durch das in den Abgasauslass 12 des Wärmetauschers 2 eingeschobene Anschlussrohr 15 durch das Saugzuggebläse 16 in den elektrostatischen Abscheider 10 gefördert werden. Während des Durchströmens des aufwärts gerichteten Strömungskanalabschnitts 14 erfolgt die elektrostatische Abscheidung der Feststoffteilchen aus den Abgasen, die nach ihrer Reinigung in den durch den Anschlussflansch 9 begrenzten Sammelraum 33 strömen, der das Saugzuggebläse 16 aufnimmt, wenn der elektrostatische Abscheider 10 nicht an den Kesselmantel 8 angeschlossen ist. Es kann somit der an diesen Sammelraum 33 angeschlossene Abgasabzug 34 mit seiner Verbindung zu einem Abgaskamin ohne Umbau genützt werden.

## Patentansprüche

1. Heizkessel mit einem einer Brennkammer (1) nachgeordneten, einen Sturz- und einen Steigzug (3, 4) für die Verbrennungsgase umfassenden Wärmetauscher (2), mit einer den Sturz- und den Steigzug (3, 4) verbindenden, einen Abscheider für Flugasche bildenden Umlenkkammer (5), mit einem den Wärmetauscher (2) aufnehmenden Kesselmantel (8), der einen am Abgasauslass (12) des Wärmetauschers (2) vorgesehenen Anschlussflansch (9) für ein Saugzuggebläse (16) aufweist, mit einem Saugzuggebläse (16) und mit einem elektrostatischen Abscheider (10), dessen außerhalb des Kesselmantels (8) angeordnetes Gehäuse (11) zwischen einem Einlass und einem Auslass einen abwärts und einen aufwärts verlaufenden Strömungskanalabschnitt (13, 14) mit eine Sprühelektrode (20) umgebenden Abscheideelektroden (21) sowie eine die beiden Strömungskanalabschnitte (13, 14) verbindende Abscheidekammer (22) umfasst, **dadurch gekennzeichnet, dass** das Gehäuse (11) des elektrostatischen Abscheiders (10) mit seinem Einlass am Anschlussflansch (9) des Kesselmantels (8) für das Saugzuggebläse (16) angeflanscht ist und das Saugzuggebläse (16) aufnimmt.

2. Heizkessel nach Anspruch 1, **dadurch gekennzeichnet, dass** die Abscheidekammer (22) des elektrostatischen Abscheiders (10) eine in der Umlenkkammer (5) des Wärmetauschers (2) mündende Förderschnecke (23) aufweist.

3. Heizkessel nach Anspruch 2, **dadurch gekennzeichnet, dass** die Förderschnecke (23) der Abscheidekammer (22) mit einer Förderschnecke (6) der Umlenkkammer (5) des Wärmetauschers (2) in Antriebsverbindung steht.

4. Heizkessel nach Anspruch einem der Ansprüche 1 bis 3, **dadurch gekennzeichnet, dass** die Abscheideelektroden (21) und die Sprühelektrode (20) in einem der Höhe nach verschiebbar im Gehäuse (11) gelagerten Gestell (19) angeordnet sind, an dem ein Stelltrieb angreift.

5. Heizkessel nach Anspruch 4, **dadurch gekennzeichnet, dass** der Stelltrieb für das die Abscheideelektroden (21) und die Sprühelektrode (20) aufweisende Gestell (19) als Nockenantrieb (29) ausgebildet ist.

6. Heizkessel nach Anspruch 5, **dadurch gekennzeichnet, dass** der Nockenantrieb (29) einen drehbar gelagerten, mit einem am Gestell (19) vorgesehenen Nockenfolger (32) zusammenwirkenden Nocken (30) mit einer Steilflanke (31) aufweist, der mit der Förderschnecke (23) der Abscheidekammer (22) antriebsverbunden ist.

## Claims

1. Boiler having a heat exchanger (2) which is disposed downstream of a combustion chamber (1) and comprises a downcomer and a riser (3, 4) for the combustion gases, having a deflection chamber (5) which connects the downcomer and the riser (3, 4) and forms a separator for fly ash, having a boiler jacket (8) which accommodates the heat exchanger (2) and has a connecting flange (9) for an induced draught fan (16), said connecting flange being provided at the exhaust gas outlet (12) of the heat exchanger (2), having an induced draught fan (16) and having an electrostatic separator (10), of which the housing (11), disposed outside the boiler jacket (8), has, between an inlet and an outlet, a downwardly extending and an upwardly extending flow channel portion (13, 14) with separating electrodes (21) surrounding a spray electrode (20), and a separating chamber (22) connecting the two flow channel portions (13, 14), **characterised in that** the housing (11) of the electrostatic separator (10) is flange-mounted with its inlet on the connecting flange (9) of the boiler jacket (8) for the induced draught fan (16) and accommodates the induced draught fan (16).

2. Boiler as claimed in claim 1, **characterised in that** the separating chamber (22) of the electrostatic separator (10) has a conveying screw (6) which issues in the deflection chamber (5) of the heat exchanger (2).

3. Boiler as claimed in claim 2, **characterised in that** the conveying screw (23) of the separating chamber (22) is in drive connection with a conveying screw (6) of the deflection chamber (5) of the heat exchanger (2).

4. Boiler as claimed in any one of claims 1 to 3, **characterised in that** the separating electrodes (21) and the spray electrode (20) are disposed in a frame (19) which is mounted in the housing (11) so as to be displaceable in height and which is acted on by an actuating drive.

5. Boiler as claimed in claim 4, **characterised in that** the actuating drive for the frame (19) having the separating electrodes (21) and the spray electrode (20) is designed as a cam drive (29).

6. Boiler as claimed in claim 5, **characterised in that** the cam drive (29) has a rotatably mounted cam (30) with a steep flank (31), said cam cooperating with a cam follower (32) provided on the frame (19) and being drivingly connected to the conveying screw (23) of the separating chamber (22).

## Revendications

1. Chaudière de chauffage équipée d'un échangeur de chaleur (2) disposé en aval d'une chambre de combustion (1) et comprenant des conduits de descente et des conduits de montée (3, 4) pour les gaz de combustion, comprenant une chambre de déviation (5) qui relie les conduits de descente et les conduits de montée (3, 4) et qui constitue un séparateur pour les cendres volantes, comprenant une jaquette d'habillage de chaudière (8) qui est destinée à recevoir l'échangeur de chaleur (2), comprenant une bride de raccordement (9) qui est prévue à la sortie des gaz d'échappement (12) de l'échangeur de chaleur (2) pour un ventilateur de tirage par aspiration (16), comprenant un ventilateur de tirage par aspiration (16) et un séparateur électrostatique (10) dont le boîtier (11) qui est agencé à l'extérieur de la jaquette d'habillage de chaudière (8) présente, entre une entrée et une sortie, une section de canal d'écoulement (13, 14) qui s'étend vers le bas et une section de canal d'écoulement (14) qui s'étend vers le haut, et comprenant des électrodes de séparation (21) qui entourent une électrode de pulvérisation (20) ainsi qu'une chambre de séparation (22) qui entoure les deux sections de canal d'écoulement (13, 14), **caractérisée en ce que** le boîtier (11) du séparateur électrostatique (10) est bridé au niveau de son côté d'entrée sur la bride de raccordement (9) de la jaquette d'habillage de chaudière (8) pour le ventilateur de tirage par aspiration (16) et reçoit le ventilateur de tirage par aspiration (16).

2. Chaudière de chauffage selon la revendication 1, **caractérisée en ce que** la chambre de séparation (22) du séparateur électrostatique (10) est pourvue d'une vis sans fin d'alimentation (23) qui débouche à l'intérieur de la chambre de déviation (5) de l'échangeur de chaleur (2).

3. Chaudière de chauffage selon la revendication 2, **caractérisée en ce que** la vis sans fin d'alimentation (23) de la chambre de séparation (22) se trouve en liaison d'entraînement avec une vis sans fin d'alimentation, (6) de la chambre de déviation (5) de l'échangeur de chaleur (2).

4. Chaudière de chauffage selon l'une quelconque des revendications 1 à 3, **caractérisée en ce que** les électrodes de séparation (21) et l'électrode de pulvérisation (20) sont agencées à l'intérieur d'un cadre (19) qui est monté de façon déplaçable en hauteur à l'intérieur du boîtier (11) et sur lequel un mécanisme de réglage vient en prise.

5. Chaudière de chauffage selon la revendication 4, **caractérisée en ce que** le mécanisme de réglage pour le cadre (19) comprenant les électrodes de séparation (21) et l'électrode de pulvérisation (20) est conçu sous la forme d'un mécanisme d'entraînement à came (29).

6. Chaudière de chauffage selon la revendication 5, **caractérisée en ce que** le mécanisme d'entraînement à came (29) comprend une came (30) présentant un flanc raide (31) qui est montée de façon rotative, qui coopère avec un galet suiveur de came (32) prévu sur le cadre (19) et qui est reliée par liaison d'entraînement à la vis sans fin d'alimentation (23) de la chambre de séparation (22).
